# EUROPÄISCHE PATENTANMELDUNG

(11) **EP 1 269 821 A1**
(43) Veröffentlichungstag der Anmeldung: **02.01.2003**
(21) Anmeldenummer: 02011890.7
(22) Anmeldetag: 29.05.2002
(51) Int. Cl.: A01D 34/73, A01D 34/52

(54) **Schwenkteil, Rotor und deren Verwendung**

(30) Priorität: 20.06.2001 US 885461
(71) Anmelder: DEERE & COMPANY, Moline, Illinois 61265-8098 (US)
(72) Erfinder: Petersen, John Gregory, Ottumwa, IA 52501 (US); Verhulst, Michael Joseph, Ottumwa, IA 52501 (US); Sloan, Charles Scott, Blakesbury, IA 52536 (US)
(74) Vertreter: Magin, Ludwig Bernhard

(57) **Zusammenfassung**

In Mähwerken werden Mähklingen verwendet, die pendelnd im Randbereich von Mähtellern aufgehängt sind. Die Aufhängung erfolgt mittels Schrauben, die sich durch den Mähteller und die Mähklingen erstrecken.

Es wird vorgeschlagen, in den als Mähklingen ausgebildeten Schwenkteilen (14) Ausnehmungen (16) vorzusehen, die einen Abschnitt (20) nicht-runden Querschnitts in dem radial innenliegenden Bereich und einen Abschnitt (18) größeren Querschnitts in dem radial außenliegenden Bereich aufweisen, wobei der Halter (22) einen nicht-runden Querschnitt aufweist, der zu dem des nicht-runden Querschnitts in dem Schwenkteil (14) passt und während des Betriebs mit diesem in Eingriff steht.

## Beschreibung

Die Erfindung betrifft einen Schwenkteil geeignet zur Anbringung an einem Rotor wobei der Schwenkteil eine Ausnehmung oder einen Halter aufweist, die mit einem Halter oder einer Ausnehmung des Rotors in Formschluss bringbar sind, sowie einen Rotor und deren Verwendung.

Aus der US-A-4,443,998 ist ein Mähbalken mit ovalen Mähtellern bekannt, an deren flachen Endbereichen Mähklingen pendelnd angelenkt sind. Die Verbindung der Mähklingen erfolgt über Schrauben in den Mähtellern, die runde Löcher in dem Endbereich der zugeordneten Mähklinge durchdringen.

Das der Erfindung zugrunde liegende Problem wird darin gesehen, dass eine hohe Umdrehungsgeschwindigkeit erforderlich ist, um die Mähklingen in der gestreckten Lage zu halten, wenn das Mähgut einen hohen Widerstand aufweist.

Dieses Problem wird erfindungsgemäß durch die Lehre des Patentanspruchs 1 gelöst, wobei in den weiteren Patentansprüchen die Lösung in vorteilhafter Weise weiterentwickelndee Merkmale aufgeführt sind.

Auf diese Weise kann der Schwenkteil im Bereich seinen Abschnitts mit größerem Querschnitt frei pendeln, um somit beim Auftreffen auf ein Hindernis ausweichen zu können, und er wird gegen eine Schwenkbewegung aus seiner gestreckten Lage gehalten, weil der Abschnitt mit nicht-rundem Querschnitt auf dem Halter mit ebenfalls nicht-rundem Querschnitt formschlüssig gehalten wird.

Der Abschnitt nicht-runden Querschnitts kann in der einfachsten Form als ein rechter Winkel ausgebildet sein, in den ein quadratischer oder rechteckeckiger Halter eingesetzt ist. Dies schließt nicht aus, dass der Abschnitt nicht-runden Querschnitts oval, dreieckig u.s.w. ausgebildet ist.

Die Ausbildung des größeren Querschnitts als Teil einer Kreisfläche hat den Vorteil, dass es keine Kanten gibt, in denen sich der eventuell quadratische Querschnitt des Halters verfangen könnte.

Eine Möglichkeit, die Erfindung in Einzelheiten zu verwirklichen, besteht darin, dass der Schwenkteil ein z. B. quadratisches Loch enthält, in das ein quadratischer Halter drehfest eingesetzt ist. Dieser quadratische Halter kann dann in einer Kerbe, einem Winkel oder dergleichen im Wesentlichen festgelegt werden.

Eine andere Möglichkeit besteht in der Verwendung einer Ausnehmung mit einem Abschnitt runden und eines rechteckigen Querschnitts in dem Schwenkteil, wobei der Halter in dem Abschnitt runden Querschnitts drehbar ist.

Der Schwenkteil bringt sich automatisch in die richtige Lage, in der er während des Betriebs einen höheren Bewegungswiderstand erfährt, wenn sich die Ausnehmung nicht im Schwerpunkt befindet und der Bereich größeren Querschnitts dem Schwerpunkt näher ist als der nicht-runden Querschnitts.

Flächen, die einen nicht-runden Querschnitt begrenzen, können fertigungsvereinfachend auch dadurch leicht gebildet werden, dass der entsprechende Halter entsprechend geformt ist, z. B. Schenkel aufweist, die in der Form eines "V" verlaufen.

Strohhäcksler, Mähwerke, Mähaufbereiter, Schredder und dergleichen verwenden Rotoren und Schwenkteile der vorgenannten Art, weil der raue Betrieb zu hohen Widerständen bei dichtem Bestand führt, in denen es wichtig ist, dass der Schwenkteil, also die Mähklinge, der Häckselschlegel und dergleichen nicht ausweicht.

Da sich aufgrund der Fliehkraft der Schwenkteil radial zu der Drehachse des Rotors ausrichtet, nimmt er in der ausgestreckten Lage automatisch und sicher die "arretierte" Stellung ein, wenn die Kanten für den Formschluss ebenfalls auf der Radialen liegen.

In der Zeichnung ist ein nachfolgend näher beschriebenes Ausführungsbeispiel der Erfindung dargestellt. Es zeigt:
- Fig. 1: einen als Mähteller ausgebildeten Rotor mit einem als Mähklinge ausgebildeten Schwenkteil in Draufsicht,
- Fig. 2: den Schwenkteil mit einer Halterung in perspektivischer Darstellung,
- Fig. 3: den Schwenkteil mit der Halterung in schematischer Darstellung und in Draufsicht,
- Fig. 4: einen als Aufbereitungsrotor ausgebildeten Rotor und einen als Schlegel ausgebildeten Schwenkteil in perspektivischer Darstellung,
- Fig. 5: den Rotor und den Schwenkteil nach Figur 4 in Seitenansicht, und
- Fig. 6: einen Rotor und einen Schwenkteil ähnlich dem in Figur 4, allerdings in einer geänderten Ausführung.

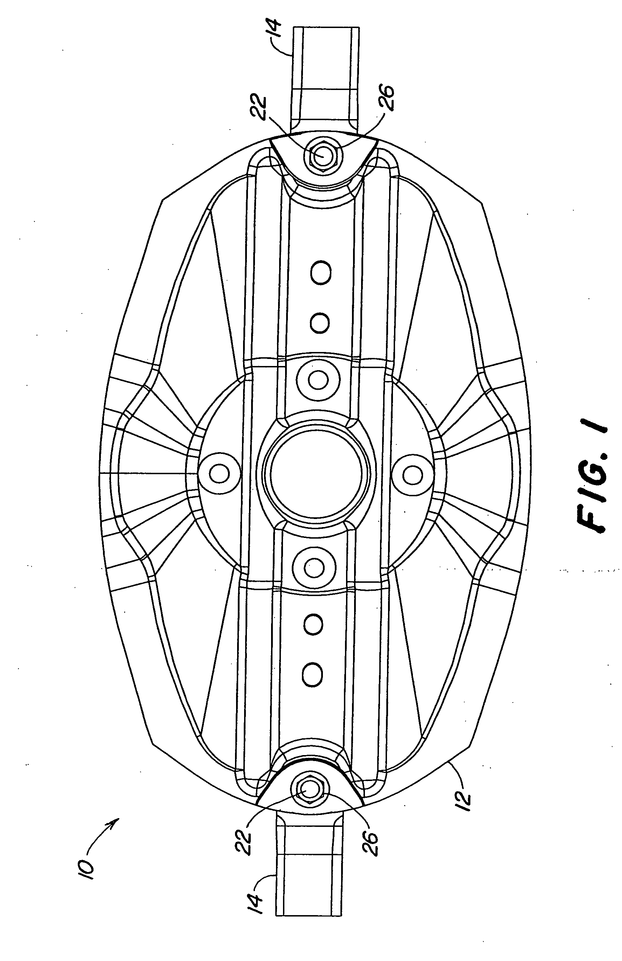

In Figur 1 ist ein erstes Ausführungsbeispiel der Erfindung gezeigt, nämlich wie sie an einem Schneidzusammenbau 10 mit einem als Mähteller ausgebildeten Rotor 12 verwendet wird, an dem ein Paar als Messer oder Mähklinge ausgebildeter Schwenkteile 14 gesichert ist, und zwar an entsprechenden Stellen an sich gegenüberliegenden Enden der Haupterstreckung des Rotors 12.

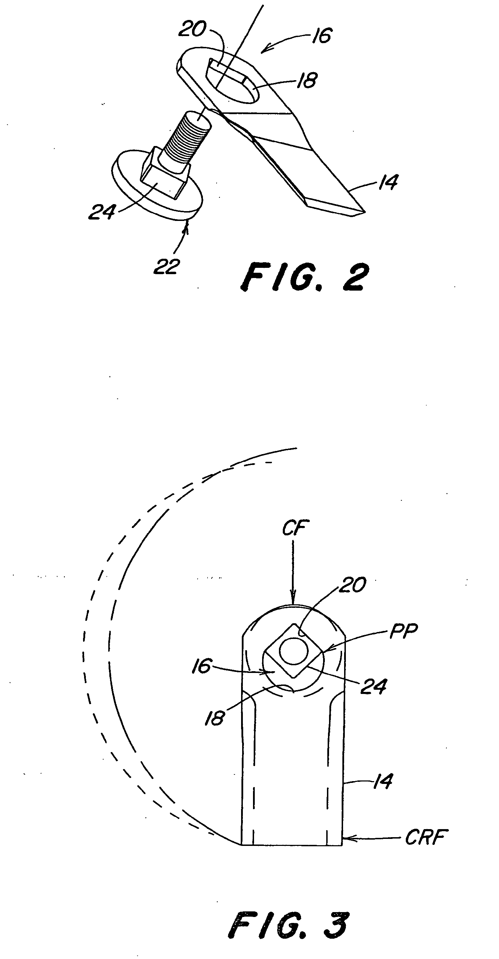

Aus den Figuren 2 und 3 ist zu erkennen, dass jeder Schwenkteil 14 einen radial inneren Endbereich enthält, der mit einer der Befestigung dienenden Ausnehmung 16 versehen ist, die von einem in diesem Ausführungsbeispiel kreisförmigen, radial äußeren Abschnitt 18 begrenzt wird, der geringfügig größer ist als ein Halbkreis (ca. 210 Grad in der dargestellten Ausführungsform) und der an einen Abschnitt 20 angrenzt, der radial nach innen konvergiert. In diesem Zusammenhang bedeutet "innen" die radiale Lage in Bezug auf die Drehachse des Rotors 12, an den der Schwenkteil 14 angebracht wird. Ein in der Form einer Schraube, insbesondere einer Schlossschraube, gehaltener Halter 22 enthält eine quadratische Schulter 24, deren aneinander angrenzende Seiten zu dem V-förmigen Ausschnitt 20 der Ausnehmung 16 passen. Wenn der Halter 22 in den Rotor 12 eingesetzt ist, um den zugeordneten Schwenkteil 14 zu halten, befindet sich die Schulter 24 in der Ausnehmung 16, wobei ein Satz sich gegenüberliegender Kanten so angeordnet ist, dass sie sich auf einer Linie befinden, die sich radial von der Drehachse des Rotors 12 aus erstreckt. Eine Mutter 26 ist auf einem Gewindeabschnitt des Halters 22 aufgenommen, um den Schwenkteil 14 auf dem Rotor 12 zu sichern. Während es auf die runde Form des Abschnitts 18 nicht ankommt, muss der Querschnitt aber groß genug sein, um den Halter 22 drehbar in sich aufnehmen zu können.

Während des Betriebs dreht sich der Rotor 12 um seine Mittenachse, was zu einer Fliehkraft CF führt, die radial nach außen gerichtet auf jeden Schwenkteil 14 wirkt, wie dies in Figur 3 gezeigt ist. Benachbarte Seiten der quadratischen Schulter 24 des Halters 22 setzen sich dann in den V-förmigen Abschnitt 20 der Ausnehmung 18. Wenn man mit Blick auf Figur 1 eine entgegen dem Uhrzeigerdrehsinn gerichtete Drehung des Rotors 12 annimmt, wird das Gut während des Schneidvorgangs eine Widerstandskraft CRF auf den Schwenkteil 14 ausüben, wie sie in Figur 3 angezeigt ist. Die vorauseilende Kante der Schulter 24 wird dann als Schwenkpunkt PP wirken, um den der Schwenkteil 14 klappen kann, wenn ein Hindernis erfasst wird, weil nur dann die Widerstandskraft CRF ausreicht, den Widerstand einer Schwenkbewegung zu überwinden, der von dem aus den benachbarten Seiten der Schulter 24 gebildeten Anschlag und dem V-förmigen Abschnitt 20 der Ausnehmung 16 hervorgeht. Wenn einmal ein Hindernis erfasst ist und der Schwenkteil 14 anfängt, zurück zu schwenken, lässt es der von dem kreisförmigen Abschnitt 18 gebotene Freiraum in der Ausnehmung 16 zu, dass der Schwenkteil 14 sich frei drehen kann.

Es wird daher angenommen, dass die Schwenkteile 14 gegen einen höheren Widerstand in ihrer ausgestreckten Lage bleiben werden, als Schwenkteile 14 mit einem typischen runden Loch. Als Vorteile ergeben sich, dass weniger Leistung erforderlich ist, um die Schwenkteile 14 ausgestreckt in der Betriebsstellung zu halten, was bedeutet, dass die Schwenkteile 14 mit einer geringeren Umdrehungszahl angetrieben werden können, was wiederum zu geringeren Turbulenzen führt, die über das stehende Erntegut strömen. Des Weiteren kann mit als Messer oder Klingen ausgebildeten Schwenkteilen 14, die während des Schneidebetriebs stets ausgestreckt bleiben, eine höhere Schneidleistung erzielt werden. Außerdem bewegt sich der Schwenkradius der Spitze des Schwenkteils 14 während der nach hinten gerichteten Schwenkbewegung zur Seite, wenn das Hindernis getroffen wird, was dem Schwenkteil 14 mehr Freiraum zu den Schwenkteilen 14 benachbarter Rotoren 12 gibt.

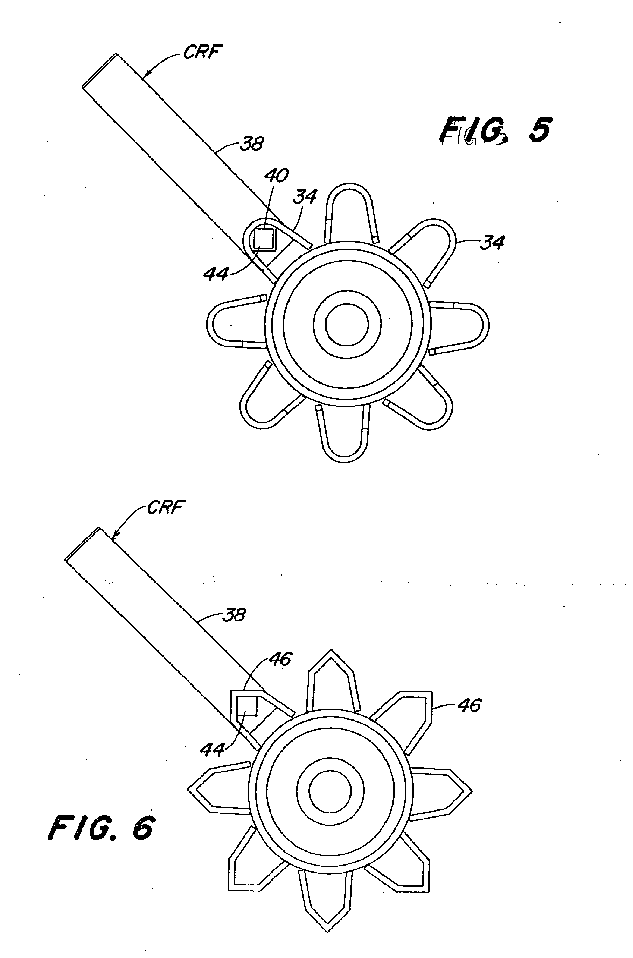

Es wird im Weiteren Bezug auf ein zweites Ausführungsbeispiel in der Form eines Aufbereitungsrotors 30 der Erfindung genommen, der einen zylindrischen Rotor 32 aufweist, auf den die Schenkel einer Vielzahl U-förmiger auch als Halter bezeichenbarer Halter 34 geschweißt sind. Jeder der Halter 34 ist mit einem Schlitz 36 versehen, in dem der innere Endbereich eines als Y-förmiger Zinken ausgebildeten Schwenkteils 38 aufgenommen ist, wobei der innere Endbereich mit einer Ausnehmung 40 (Fig. 5) versehen ist, die wie die Ausnehmung 16 des zuvor beschriebenen Ausführungsbeispiels ausgebildet und derart angeordnet ist, dass ein V-förmiger Abschnitt der Ausnehmung 40 radial nach innen zu einer Drehachse des Rotors 32 konvergiert, wenn sich der Schwenkteil 38 radial erstreckt, wie dies in Figur 5 gezeigt ist. Ein Halter 42 enthält einen Schaft 44 mit einem quadratischen Querschnitt, der in der Ausnehmung 40 aufgenommen und in einer bekannten, nicht gezeigten Weise verstiftet wird, um so den Halter 42 festzulegen und zu verhindern, dass sich der Schwenkteil 38 aus dem Schlitz 36 heraus bewegt.

Es wird nun Bezug auf Figur 6 genommen, in der eine Abwandlung des zweiten Ausführungsbeispiels gezeigt wird und worin der Rotor 32 anstelle mit den U-förmigen Haltern 34 mit einer Vielzahl von Haltern 46 versehen ist (nur einer ist gezeigt), die V-förmige äußere Bereiche aufweisen, wobei der Halter 42 in einer dazu passend ausgebildeten Ausnehmung des Schwenkteils 38 aufgenommen ist, so dass sich beide Teile gemeinsam bewegen. Die flachen Seiten des Halters 42 passen dann zu den konvergierenden Seiten des V-förmigen Abschnitts der Halter 46 und werden gegen diese gedrängt, wenn die Schwenkteile 38 aufgrund der während der Rotation auftretenden Fliehkräfte in ihre erste Stellung gedrängt werden. Die nach innen divergierenden Schenkel der Halter 46 würden für den notwendigen Freiraum für die Schwenkteile 38 sorgen, damit diese zurückschwenken können, wenn sie in Bedingungen geraten, denen zufolge eine Kraft auf die Schwenkteile 38 wirkt, die den Widerstand an den miteinander in Eingriff stehenden Flächen übersteigt und zu einer rückwärts gerichteten Schwenkbewegung des Schwenkteils 38 führt.

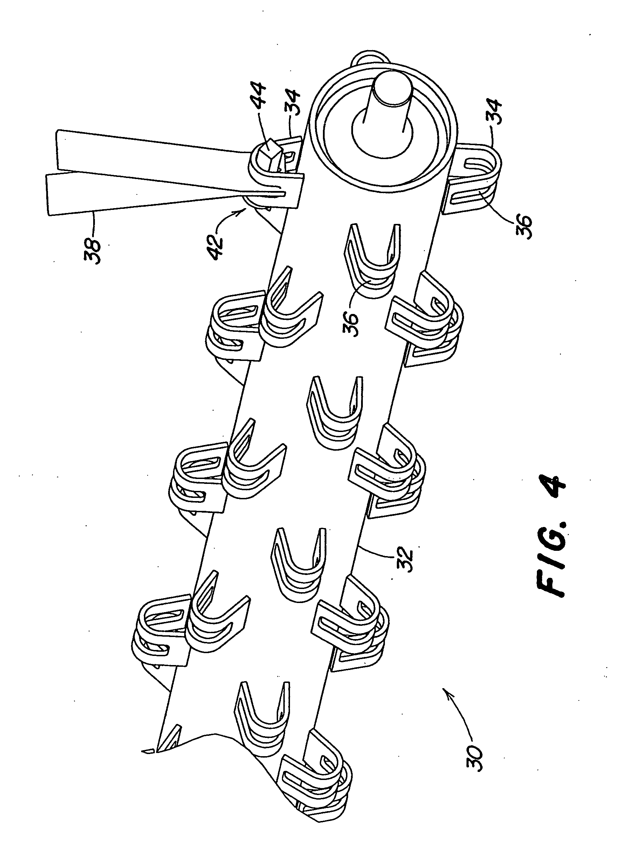

Wie bereits bei dem vorhergehenden Ausführungsbeispiel - während des Betriebs der ersten Variante des zweiten Ausführungsbeispiels (Fig. 4 und 5) drängt die Fliehkraft den Schwenkteil 38 radial derart nach außen, dass der V-förmige Abschnitt der Ausnehmung 40 gegen die damit zusammenwirkenden Oberflächen des Halters 42 drückt, um somit der Tendenz des Schwenkteils 38 von einer Widerstandskraft CRF zurückgeschwenkt zu werden, die von dem auf den Schwenkteil 38 ausgeübten Gut ausgeht, einen beachtenswerten Widerstand entgegen zu setzen. Der Vorteil ist der, dass der Aufbereitungsrotor 30 geschnittenes Gut in einer effizienteren Art bewegt, wenn die Schwenkteile 38 vollkommen ausgestreckt sind.

In der zweiten Variante (Figur 6) werden die konvergierenden Seitens des Halters 42 aufgrund der Fliehkraft während des Betriebs gegen die konvertierenden äußeren Oberflächen des zugehörigen Halters 46 gedrängt, wobei der Freiraum zwischen den Schenkeln das nötige Spiel bietet, damit der Schwenkteil 38 in seine zweite Stellung zurück schwenken kann, wenn der Schwenkteil 38 überlastet ist.

Es wird zu verstehen gegeben, dass die beiden offenbarten Ausführungsbeispiele nur beispielhaft für verschiedene Anwendungen stehen, die von dem Vorteil der Erfindung profitieren können. Jegliche Situation, in der es erwünscht ist, dass ein schwenkbar angelenkter Bauteil in einer vollkommen ausgestreckten, radialen Lage bleibt, wie er aufgrund der Fliehkraft hervorgerufen wird, bis ein beachtenswerter Arbeitswiderstand erfahren wird, wäre ein geeigneter Anwendungsfall für diese Erfindung.

Neben den gezeichneten und beschriebenen Ausführungsformen wäre auch an die Anwendung bei Strohhäckslern in oder getrennt von Mähdreschern, bei Schlegelfeldhäckslern, Schreddern und dergleichen zu denken.

## Patentansprüche

1. Schwenkteil (14, 38) geeignet zur Anbringung an einem Rotor (12, 32), wobei der Schwenkteil (14, 38) eine Ausnehmung (16, 40) oder einen Halter (22, 42) aufweist, die mit einem Halter (22, 46) oder einer Ausnehmung des Rotors (12, 32) in Formschluss bringbar sind, wobei die Ausnehmungen (16, 40) jeweils einen Abschnitt (20) nicht-runden Querschnitts und einen Abschnitt (18) aufweisen, der größer ist als der des Halters (22, 42) und wobei der Halter (22, 42) einen nicht-runden Querschnitt aufweist, der zu dem der Ausnehmung (16, 40) passt.

2. Schwenkteil nach Anspruch 1, **dadurch gekennzeichnet, dass** der Abschnitt (20) nicht-runden Querschnitts wenigstens zwei unter einem Winkel von im Wesentlichen 90 Grad zueinander verlaufenden Flächen aufweist.

3. Schwenkteil nach Anspruch 1 oder 2, **dadurch gekennzeichnet, dass** der Abschnitt größeren Querschnitts (18) einen Teil einer Kreisfläche einnimmt.

4. Schwenkteil nach einem oder mehreren der vorherigen Ansprüche, **dadurch gekennzeichnet, dass** er eine Ausnehmung (16) mit einem Abschnitt nicht-runden Querschnitts (20) aufweist, in die ein Halter (22) mit einem dazu passenden Querschnitt eingesetzt und drehfest gesichert ist.

5. Schwenkteil nach einem oder mehreren der vorherigen Ansprüche, **dadurch gekennzeichnet, dass** er eine Ausnehmung (16) aufweist, die einen teilweise kreisförmiger Abschnitt (18) und einen Abschnitt (20) mit zwei im Wesentlichen senkrecht zueinander verlaufenden Flächen aufweist.

6. Schwenkteil nach einem oder mehreren der vorherigen Ansprüche, **dadurch gekennzeichnet, dass** die Ausnehmung (16, 40) mit Bezug auf den Schwerpunkt des Schwenkteils (14, 38) exzentrisch gelegen und der Abschnitt (18) größeren Querschnitts dem Schwerpunkt zugelegen ist.

7. Rotor (32) mit einem Halter (46) mit Schenkeln, die zu der Drehachse des Rotors (32) hin divergieren und der in dem dem' Rotor (32) radial beabstandeten Abschnitt divergierende Flächen aufweist, die einen nicht-runden Querschnitt umschließen.

8. Schwenkteil und Rotor nach einem oder mehreren der vorherigen Ansprüche, **dadurch gekennzeichnet, dass** sie in einem Strohhäcksler, einem Mäh- oder Häckselwerk (10) oder einem Mähaufbereiter (30) verwendet werden.

9. Schwenkteil und Rotor nach einem oder mehreren der vorherigen Ansprüche, **dadurch gekennzeichnet, dass** während des Betriebs der Abschnitt (20) nicht-runden Querschnitts so angeordnet ist, dass in ihm enthaltene Kanten, insbesondere im Schnittbereich von Flächen auf einer radialen Linie zu der Drehachse des Rotors (12, 32) liegen.
